# EUROPÄISCHE PATENTSCHRIFT

(11) **EP 3 915 734 B1**
(45) Veröffentlichungstag und Bekanntmachung des Hinweises auf die Patenterteilung: **12.11.2025**
(21) Anmeldenummer: 20177614.3
(22) Anmeldetag: 29.05.2020
(51) Int. Cl.: B25J 9/00, B25J 13/08, B25J 15/00, B25J 19/00, B25J 15/06, B25J 9/16

(54) **AUFNAHMEVORRICHTUNG ZUM AUFNEHMEN EINES BELIEBIG ANGEORDNETEN GEGENSTANDS SOWIE VERFAHREN ZUM BETREIBEN EINER AUFNAHMEVORRICHTUNG**
RECORDING DEVICE FOR RECORDING ANY ARRANGED ITEM AND METHOD FOR OPERATING A RECEIVING DEVICE
DISPOSITIF DE RÉCEPTION POUR RECEVOIR UN OBJET AGRÉÉ ET PROCÉDÉ POUR FAIRE FONCTIONNER UN DISPOSITIF DE RÉCEPTION

(43) Veröffentlichungstag der Anmeldung: 01.12.2021
(73) Patentinhaber: SW Automation GmbH, 88069 Tettnang (DE)
(72) Erfinder: Makis, Sven, 88085 Langenargen (DE); van Kampen, Nicolas, 88069 Tettnang (DE)
(74) Vertreter: Schorr, Peter Karl

(56) Entgegenhaltungen:
- DE-A1- 102013 009 907
- DE-A1- 102015 215 973
- DE-A1- 102018 000 730
- DE-A1- 102018 205 669
- US-A- 5 452 932
- US-A1- 2012 059 517
- US-A1- 2020 148 491

## Beschreibung

Die Erfindung betrifft eine Aufnahmevorrichtung zum Aufnehmen eines beliebig angeordneten Gegenstands, insbesondere aus einer eine Vielzahl von Gegenständen aufweisenden Schütte, mit mindestens einer Steuereinheit, der mindestens ein Sensormittel zuordenbar oder zugeordnet ist, durch das ein Koppelabschnitt mindestens eines Gegenstands durch die Steuereinheit erfassbar und/oder definierbar ist, mit mindestens einem durch die Steuereinheit ansteuerbaren Handlinggerät, wie Roboter, das durch die Steuereinheit am Gegenstand positionierbar ist, mit mindestens einem Aufnahmemittel, das über ein Anschlussstück an dem Handlinggerät festlegbar ist, und durch das der Gegenstand aufnehmbar, am Aufnahmemittel festlegbar und in eine Übergabeposition überführbar ist, wobei das Aufnahmemittel mindestens ein Koppelelement mit mindestens einem, insbesondere flächenhaften, Anlageabschnitt umfasst, mit dem das Aufnahmemittel am Koppelabschnitt des Gegenstands anlegbar und ein Kraftschluss durch Normalkraft zwischen Koppelelement des Aufnahmemittels und Gegenstand herstellbar ist und ein Verfahren zum Betreiben einer derartigen Aufnahmevorrichtung.

Aus Produktion und Fertigung ist es bekannt, Maschinen, insbesondere Werkzeugmaschinen, mit Werkstücken zu versorgen, um diese durch die Werkzeugmaschinen bearbeiten zu lassen. Hierfür können bei den Werkzeugmaschinen so genannte Magazine vorgesehen sein, in denen mehrere Werkstücke bevorratbar sind, um unbearbeitete Werkstücke zwischenzulagern, bevor diese bearbeitet werden und/oder um bearbeitete Werkstücke zwischenzulagern, nachdem diese bearbeitet worden sind.

Das Beladen und Entladen von Werkzeugmaschinen erfolgt bei modernen Anlagen zumindest nahezu automatisch. Hierbei werden die Werkstücke von einem Handlinggerät, wie Roboter, aus einem Speichermittel entnommen und dem Magazin und/oder der Werkzeugmaschine zugeführt.

Die bei heutigen Anlagen verwendeten Handlinggeräte umfassen meist Aufnahmemittel, die mittels Formschluss und/oder Reibschluss einen Gegenstand, wie Werkstück, fassen und aus dem Speichermittel, beispielsweise einer Schütte, dem Magazin oder der Werkzeugmaschine zuführen. Dieses setzt jedoch eine leichte Zugänglichkeit der einzelnen Gegenstände, insbesondere deren Umschließbar- oder Greifbarkeit, mittels Formschluss oder Reibschluss voraus. Werden Gegenstände in Speichermitteln zur Verfügung gestellt, die chaotisch, also ungeordnet, in dem Speichermittel angeordnet sind, ist ein Aufnehmen der Gegenstände durch das Handlinggerät oft nicht ermöglicht und muss manuell durch Bedienpersonal zur Verfügung gestellt werden. Dieses ist zeitaufwändig und personalintensiv.

Eine gattungsgemäße Aufnahmevorrichtung ist jeweils bekannt aus DE 10 2018 205669 A1, US 2012/059517 A1 und DE 10 2018 000730 A1.

Ein System zum Entfernen einer Schicht eines Mehrschichtsystems, bei dem die zu entfernende Schicht durch einen Adhäsivgreifer gegriffen wird, ist bekannt aus US 2020/0148491 A1.

Eine Aufgabe eines Ausführungsbeispiels der Erfindung ist, eine Aufnahmevorrichtung zum Aufnehmen eines beliebig angeordneten Gegenstands sowie ein Verfahren zum Betreiben einer derartigen Aufnahmevorrichtung vorzuschlagen, bei der der Automatisierungsgrad erhöht ist.

Diese Aufgabe wird gelöst durch eine Aufnahmevorrichtung zum Aufnehmen eines beliebig angeordneten Gegenstands, insbesondere aus einer eine Vielzahl von Gegenständen aufweisenden Schütte, bei der das Koppelelement des Aufnahmemittels einen Adhäsivgreifer umfasst, wobei der der Adhäsivgreifer einen Klebegreifer und/oder einen Foliengreifer umfasst und die mindestes ein Leitungsmittel, durch das ein Wirkmedium zum Anlageabschnitt hin oder vom Anlageabschnitt weg transportierbar ist, und die mindestens ein im oder am Aufnahmemittel angeordnetes Speichermittel zum Bevorraten eines als Klebstoff oder Erstarrmittel ausgebildeten Wirkmediums umfasst, das durch das Leitungsmittel mit dem Aufnahmeabschnitt verbindbar oder verbunden ist.

Dadurch, dass die Aufnahmevorrichtung ein am Handlinggerät angeordnetes Aufnahmemittel umfasst, das mittels des Koppelelements mit dem Gegenstand einen Kraftschluss durch Normalkraft herstellen kann, ist ein Aufnehmen des Gegenstands auch in einer ungeordneten und chaotischen Anordnung ermöglicht.

Dadurch, dass die Aufnahmevorrichtung eine Steuereinheit umfasst, der mindestens ein Sensormittel zuordenbar ist, ist ein Koppelabschnitt des Gegenstands erfassbar und/oder definierbar, wodurch die Aufnahme in der ungeordneten und/oder chaotischen Anordnung des Gegenstands weiter erleichtert ist. Unter definierbar wird nachfolgend verstanden, dass die Steuereinheit einen Koppelabschnitt am Gegenstand identifiziert, an dem das Aufnahmemittel mit dem Anlageabschnitt kraftschlüssig festlegbar ist.

An der Übergabeposition ist der Gegenstand anordenbar und beispielsweise in einer definierten Position ablegbar und/oder durch ein weiteres Handlinggerät, wie Roboter, aufnehmbar und einem Magazin oder einer Werkzeugmaschine zuführbar. Durch das Anordnen des Gegenstands an der Übergabeposition kann eine definierte Anordnung des Gegenstands gewährleistet werden sowie dass der Gegenstand durch das weitere Handlinggerät mittels Formschluss oder mittels Reibschluss aufnehmbar ist. Solchenfalls kann das weitere Handlinggerät ein herkömmliches Handlinggerät, insbesondere einen herkömmlichen Roboter, umfassen.

Dadurch, dass das Wirkmedium Klebstoff oder ein Erstarrmittel umfasst, kann zwischen dem Koppelabschnitt und dem Anlageabschnitt eine Adhäsion gebildet werden. Das Erstarrmittel kann beispielsweise Wasser umfassen.

Dadurch, dass die Aufnahmevorrichtung mindestens ein im oder am Aufnahmemittel angeordnetes Speichermittel zum Bevorraten eines als Klebstoff oder Erstarrmittel ausgebildeten Wirkmediums umfasst, können kurze Zuführwege des Klebstoffs oder des Erstarrmittels zum Aufnahmeabschnitt realisiert werden.

Bei dem Gegenstand kann es sich beispielsweise um ein Werkstück und/oder um ein Werkzeug handeln. Bei dem Handlinggerät kann es sich beispielsweise um einen Manipulator und/oder einen Roboter handeln.

Der mindestens eine Gegenstand kann in einem Speichermittel, insbesondere einer Schütte, allein oder mit mehreren Gegenständen angeordnet sein.

Bei Ausführungsformen der Aufnahmevorrichtung ist vorgesehen, dass das Koppelelement des Aufnahmemittels zusätzlich einen Magnetgreifer und/oder einen Sauggreifer umfasst.

Dadurch, dass das Aufnahmemittel einen Adhäsivgreifer umfasst, kann die Normalkraft zwischen Koppelelement und Gegenstand stoffschlüssig erfolgen. Wenn das Aufnahmemittel einen Magnetgreifer umfasst, können Gegenstände aufgenommen werden, die zumindest abschnittsweise magnetisch ausgebildet sind. Wenn das Aufnahmemittel einen Sauggreifer umfasst, kann durch Erzeugen eines Unterdrucks der Gegenstand auf einfache Weise am Aufnahmemittel festgelegt werden.

Wenn der Adhäsivgreifer einen Klebegreifer und/oder einen Foliengreifer umfasst, ist auf einfache Weise ein Adhäsivgreifer realisierbar.

Das Wirkmedium kann beispielsweise Luft umfassen. Dieses erweist sich insbesondere dann als vorteilhaft, wenn das Aufnahmemittel einen Sauggreifer umfasst, durch das Luft zwischen dem Anlageabschnitt des Aufnahmemittels und dem Koppelabschnitt des Gegenstands abgesaugt wird, um einen Unterdruck zu erzeugen.

Wenn das Aufnahmemittel einen Sauggreifer umfasst, erweist es sich als vorteilhaft, wenn die Aufnahmevorrichtung mindestens ein Unterdruckmittel zum Ansaugen eines als Luft ausgebildeten Wirkmediums am als Sauggreifer ausgebildeten Aufnahmemittel, insbesondere durch das Leitungsmittel, umfasst.

Das Unterdruckmittel kann unmittelbar am Aufnahmemittel angeordnet sein. Darüber hinaus ist es denkbar, dass das Unterdruckmittel vom Aufnahmemittel beabstandet ist und über das Leitungsmittel mit dem Anlageabschnitt des Aufnahmemittels verbunden ist.

Der Gegenstand kann eine beliebige Kontur umfassen. Dadurch, dass durch das Aufnahmemittel ein Kraftschluss durch Normalkraft zwischen Koppelelement des Aufnahmemittels und Gegenstand herstellbar ist, kann an der Aufnahmevorrichtung auch ein Gegenstand angeordnet werden, wenn der Koppelabschnitt des Gegenstands eine unebene, insbesondere verrundete oder kantige, Oberfläche des Gegenstands umfasst und/oder wenn der Koppelabschnitt des Gegenstands eine Vertiefung des Gegenstands umfasst.

Insbesondere, wenn der Koppelabschnitt des Gegenstands eine Vertiefung des Gegenstands umfasst, erweist es sich als vorteilhaft, wenn die Aufnahmevorrichtung mindestens ein zwischen Aufnahmeabschnitt des Koppelelements des Aufnahmemittels und Koppelabschnitt des Gegenstands angeordnetes Dichtmittel umfasst, das den Koppelabschnitt umfangseitig zumindest nahezu vollständig umgibt. Hierdurch können auch an komplizierten Geometrien ein Unterdruck aufgebaut werden, wenn das Aufnahmemittel einen Sauggreifer umfasst.

Das Dichtmittel kann beispielsweise eine umlaufende Dichtlippe umfassen. Darüber hinaus kann das Dichtmittel eine Dichtschnur umfassen. Das Dichtmittel kann am Sauggreifer angeordnet sein oder am Gegenstand festgelegt sein. Solchenfalls wird durch die Steuereinheit der Koppelabschnitt des Gegenstands in dem Bereich erfasst und/oder definiert, der durch das Dichtmittel umgeben ist.

Ferner erweist es sich als vorteilhaft, wenn der Aufnahmeabschnitt des Koppelelements des Aufnahmemittels mindestens eine, insbesondere düsenartige, Öffnung umfasst, die mittelbar oder unmittelbar mit der dem Leitungsmittel verbindbar oder verbunden ist und durch die das Wirkmedium einsaugbar oder austretbar ist.

Hierdurch ist ein einfacher Zugang durch das Aufnahmemittel zum Aufnahmeabschnitt gewährleistet, wodurch es ermöglicht ist, das Wirkmedium abzusaugen oder das Wirkmedium zuzuführen.

Wenn das Aufnahmemittel einen Adhäsionsgreifer umfasst und wenn das Wirkmedium ein Erstarrmittel oder einen Klebstoff umfasst, erweist es sich als vorteilhaft, wenn das Aufnahmemittel mindestens ein Thermoelement umfasst, durch das eine Temperatur zumindest am Anlageabschnitt des Koppelelements einstellbar ist.

Die am Anlageabschnitt einstellbare Temperatur kann beispielsweise eine Temperatur umfassen, bei der das Erstarrmittel seinen Aggregatzustand verändert. Darüber hinaus kann die Temperatur eine Temperatur umfassen, bei der ein als Klebstoff ausgebildetes Wirkmedium optimal verfestigt.

Grundsätzlich sind Ausführungsformen der Aufnahmevorrichtung denkbar, bei denen das Aufnahmemittel und das Koppelelement unlösbar aneinander festgelegt sind und/oder bei denen mindestens ein Löseelement vorgesehen ist, durch das der Gegenstand in der Übergabeposition vom Anlageabschnitt des Koppelelements des Aufnahmemittels lösbar ist.

Dieses kann beispielsweise dann der Fall sein, wenn das Koppelelement an den Gegenstand mittels Adhäsion durch Erkalten eines Erstarrmittels oder durch Aushärten eines Klebemittels unlösbar festgelegt ist. Solchenfalls kann durch das Löseelement der Gegenstand in der Übergabeposition vom Aufnahmemittel gelöst werden.

Das Löseelement kann solchenfalls beispielsweise ein Schneidelement umfassen, ein chemisches Lösemittel zum Auflösen einer Klebverbindung, ein Heizelement zum Verflüssigen des Erstarrmittels und/oder ein Hebelmittel zum Ab- oder Aufhebeln des Gegenstands vom Aufnahmemittel.

Bei der zuvor genannten Ausführungsform wird stets ein und dasselbe Koppelelement verwendet.

Darüber hinaus sind Ausführungsformen der Aufnahmevorrichtung denkbar, bei denen das Aufnahmemittel und das Koppelelement lösbar aneinander festgelegt sind und/oder bei denen das Aufnahmemittel mindestens ein Greifelement umfasst, mit dem das Koppelelement form- und/oder kraftschlüssig durch Reibung am Greifelement festlegbar ist.

Solchenfalls wird jeweils zum Festlegen eines Gegenstands ein Koppelelement unlösbar, beispielsweise durch Erkalten oder durch Verkleben, am Gegenstand festgelegt und mittels eines herkömmlichen Manipulators in die Übergabeposition überführt. Das Koppelelement kann solchenfalls im Zuge der weiteren Bearbeitung des Gegenstands vom Gegenstand gelöst werden, beispielsweise durch selbsttätiges Auftauen des Erstarrmittels oder durch Auflösen der Klebeverbindung mittels eines Lösemittels erfolgen.

Solchenfalls wird für jeden Gegenstand ein eigenes Koppelelement verwendet. Das Koppelelement kann solchenfalls stempelartig ausgebildet sein.

Um das Festlegen des Gegenstands zu verbessern umfasst ein Ausführungsbeispiel der Aufnahmevorrichtung mindestens einen Greifer, der am das Aufnahmemittel aufweisenden Handlinggerät festlegbar oder festgelegt ist, und durch den der am Aufnahmemittel festgelegte Gegenstand durch Bilden eines Hintergriffs oder Reibschluss festlegbar ist.

Hierdurch ist ein sicheres Festlegen des Gegenstands verbessert. Der Gegenstand kann solchenfalls zusätzlich durch den Greifer festgelegt werden. Dieses kann insbesondere dann erfolgen, wenn der Gegenstand bereits durch das Aufnahmemittel festgelegt und zumindest abschnittsweise außer Eingriff mit weiteren Gegenständen überführt ist. Wenn der Gegenstand außer Eingriff mit weiteren Gegenständen ist, ist der Gegenstand ohne Kollision mit den weiteren Gegenständen greifbar.

Schließlich wird die Aufgabe gelöst durch ein Verfahren zum Betreiben einer Aufnahmevorrichtung mit mindestens einem der zuvor genannten Merkmale, mit den Schritten:
a. Erfassen eines Gegenstands, insbesondere aus einer eine Vielzahl von Gegenständen aufweisenden Schütte, durch das Sensormittel und Erfassen und/oder Definieren eines Koppelabschnitts mindestens eines Gegenstands durch die Steuereinheit und/oder des der Steuereinheit zugeordneten Sensormittels;
b. Überführen des Handlinggeräts an den Gegenstand und Anlegen des Anlageabschnitts des Koppelelements des Aufnahmemittels an den Koppelabschnitt des Gegenstands;
c. Herstellen eines Kraftschlusses durch Normalkraft zwischen Koppelelement des Aufnahmemittels und Gegenstand;
d. Überführen des Gegenstands in die Übergabeposition und Ablegen des Gegenstands oder Übergeben des Gegenstands an ein weiteres Handlinggerät; und
e. Lösen des Gegenstands vom Aufnahmemittel durch
   i. Lösen des Gegenstands vom Anlageabschnitt des Koppelelements durch ein Löseelement, wenn Aufnahmemittel und das Koppelelement unlösbar aneinander festgelegt sind; oder
   ii. Lösen des Koppelelements von Aufnahmemittel, wenn Aufnahmemittel und das Koppelelement lösbar aneinander festgelegt sind.

Bei einer Weiterbildung des Verfahrens sind nachfolgende Schritte vorgesehen:
a. Erfassen einer Greifbarkeit des am Aufnahmemittel angeordneten Gegenstands durch das Sensormittel, insbesondere beim Überführen des Gegenstands in die Übergabeposition und Erfassen und/oder Definieren eines Greifabschnitts am Gegenstand durch die Steuereinheit und/oder durch das der Steuereinheit zugeordneten Sensormittels; und
b. Herstellen eines Hintergriffs oder Reibschluss zwischen Greifer und Greifabschnitt, wenn eine Zugänglichkeit des Greifabschnitts durch das Sensormittel erfasst wird.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Aufnahmevorrichtung und des Verfahrens.

In der Zeichnung zeigt:
- Figur 1: Eine isometrische Vorderansicht auf ein erstes Ausführungsbeispiel der Aufnahmevorrichtung;
- Figur 2: Eine Draufsicht auf einen Gegenstand mit daran angeordnetem Aufnahmemittel gemäß Figur 1;
- Figur 3: Eine isometrische Vorderansicht auf einen Gegenstand, der zusätzlich durch einen Greifer eines zweiten Ausführungsbeispiels der Aufnahmevorrichtung gegriffen ist;
- Figur 4: Ein schematisches Ablaufdiagramm einer Ausführungsform des erfindungsgemäßen Verfahrens.

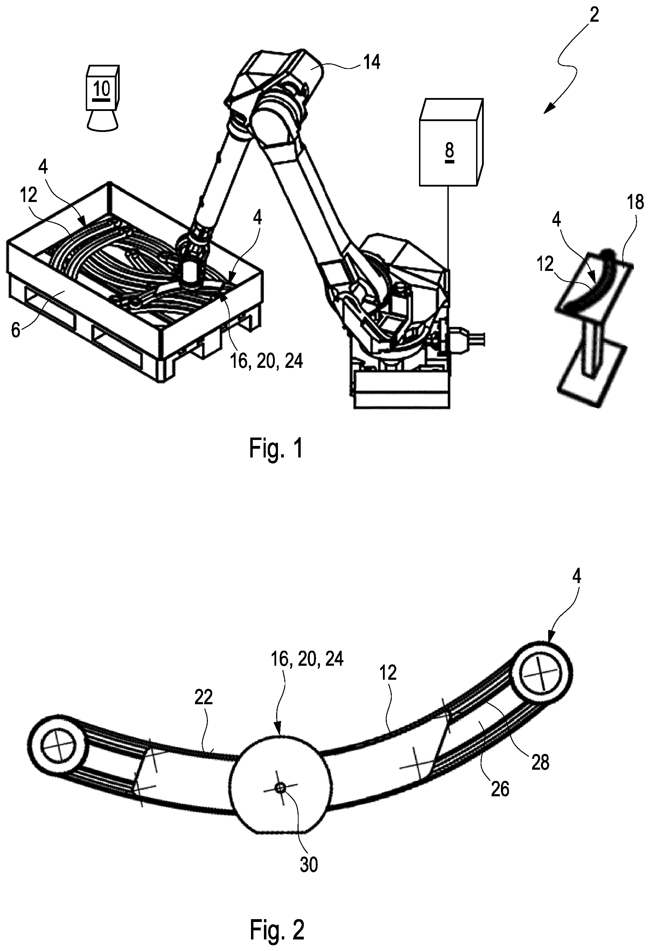

Figur 1 zeigt eine insgesamt mit dem Bezugszeichen 2 versehene Aufnahmevorrichtung zum Aufnehmen eines beliebig angeordneten Gegenstands 4, insbesondere aus einer eine Vielzahl von Gegenständen 4 aufweisenden Schütte 6. Die Aufnahmevorrichtung 2 umfasst eine Steuereinheit 8, der mindestens ein Sensormittel 10 zugeordnet ist. Durch das Sensormittel 10 kann die Steuereinheit 8 einen Koppelabschnitt 12 des mindestens einen Gegenstands 4 erfassen und/oder definieren.

Darüber hinaus umfasst die Aufnahmevorrichtung 2 ein durch die Steuereinheit 8 ansteuerbares Handlinggerät 14, wie Roboter, das durch die Steuereinheit 8 am Gegenstand 4 positionierbar ist. Ferner umfasst die Aufnahmevorrichtung 2 ein Aufnahmemittel 16, das am Handlinggerät 14 festlegbar ist und durch das der Gegenstand 4 aufnehmbar ist. Ferner ist durch das Aufnahmemittel 16 der Gegenstand 4 in eine Übergabeposition 18 überführbar und dort beispielsweise haltbar oder ablegbar.

Das Aufnahmemittel 16 umfasst ein Koppelelement 20, das einen, insbesondere flächenhaften, Anlageabschnitt 22 umfasst. Mit diesem liegt das Koppelelement 20 des Aufnahmemittels 16 am Koppelabschnitt 12 des Gegenstands 4 an. Durch das Aufnahmemittel 16 ist ein Kraftschluss durch Normalkraft zwischen dem Koppelelement 20 und dem Gegenstand 4 herstellbar.

Die Figuren 1 und 2 zeigen ein Ausführungsbeispiel der Aufnahmevorrichtung 2, bei der das Aufnahmemittel 16 durch einen Sauggreifer 24 gebildet ist. Durch diesen ist ein als Luft ausgebildetes Wirkmedium aus einem Zwischenraum zwischen dem Anlageabschnitt 22 des Aufnahmemittels 16 und dem Koppelabschnitt 12 des Gegenstands 4 entfernbar, um mittels eines Unterdrucks die zwischen Koppelelement 20 und Gegenstand 4 wirkende Normalkraft zu bilden.

Bei dem in den Figuren gezeigten Ausführungsbeispiel umfasst der Gegenstand 4 eine Unebene, insbesondere verrundete Oberfläche. Diese umfasst ferner eine Vertiefung 26, in der das Aufnahmemittel 16 mit dem Anlageabschnitt 22 eingreift.

Um die Saugwirkung des als Sauggreifers 24 ausgebildeten Aufnahmemittels 16 zu verbessern, ist bei der Aufnahmevorrichtung 2 ein Dichtmittel 28 vorgesehen, das bei dem in den Figuren gezeigten Ausführungsbeispiel der in der Vertiefung 26 des Gegenstands 4 angeordnet ist.

Um ein Entfernen von als Luft ausgebildeten Wirkmedium zu erleichtern, ist im Aufnahmemittel 16 eine Öffnung 30 vorgesehen.

Figur 2 zeigt eine Draufsicht auf einen Gegenstand 4, auf dem das Aufnahmemittel 16 angeordnet ist. Figur 2 ist entnehmbar, dass das Aufnahmemittel 16 korrespondierend, insbesondere komplementär zu einem Oberflächenabschnitt, insbesondere zum Koppelabschnitt 12 des Gegenstands 4 ausbildbar ist.

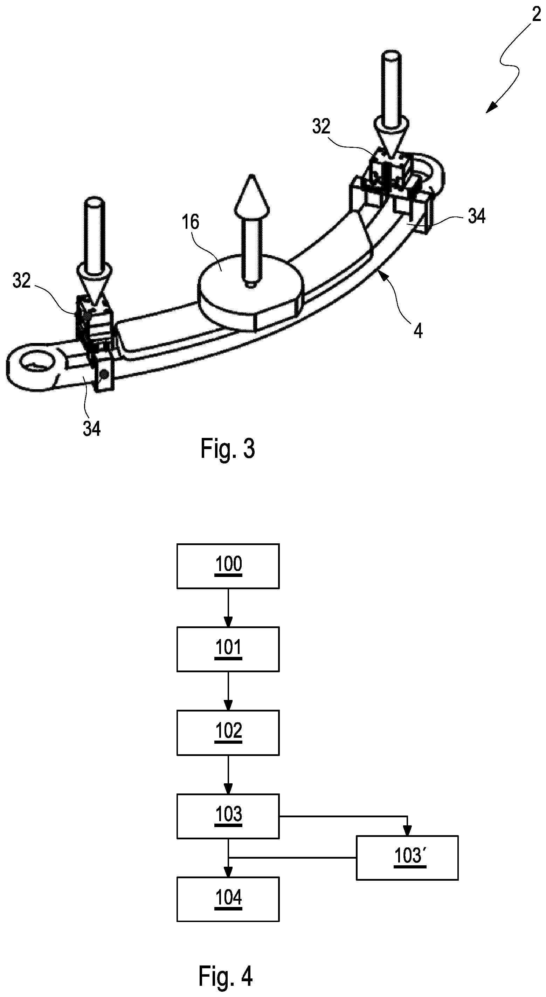

Figur 3 zeigt ein zweites Ausführungsbeispiel der Aufnahmevorrichtung 2 bei der zusätzlich zwei Greifer 32 am das Aufnahmemittel 16 aufweisenden Handlinggerät 14 festgelegt sind. Durch die Greifer 32 ist der der am Aufnahmemittel 16 festgelegte Gegenstand 4 durch Bilden eines Hintergriffs oder Reibschluss zusätzlich festlegt ist.

Die Greifer 32 sind jeweils an Greifabschnitten 34 am Gegenstand 4 festlegbar.

Figur 4 zeigt ein schematisches Ablaufdiagramm eines erfindungsgemäßen Verfahrens zum Betreiben einer Aufnahmevorrichtung 2. Unter Zuhilfenahme der in den Figuren 1 bis 3 gezeigten Gegenständen wird nachfolgend das Verfahren beschrieben:
In einem ersten Schritt 100 wird der Gegenstand 4 durch das Sensormittel 10 erfasst sowie der Koppelabschnitt 12 des Gegenstands 4 durch das Sensormittel 10 erfasst oder durch die Steuereinheit 8 definiert. Der Gegenstand 4 kann beim Verfahrensschritt 100 beispielsweise mit mehreren Gegenständen 4 in einer Schütte 6 angeordnet sein.

In einem hieran anschließenden Schritt 101 wird das Handlinggerät 14 in Richtung auf den Gegenstand 4 bewegt und der Anlageabschnitt 22 des Aufnahmemittels 16 an den Koppelabschnitt 12 des Gegenstands 4 angelegt.

In einem hieran anschließenden Schritt 102 wird ein Kraftschluss durch Normalkraft hergestellt und zwar zwischen dem Koppelelement 20 und dem Gegenstand 4. Hierbei kann die Normalkraft Adhäsion, Magnetkraft oder Saugkraft umfassen.

In einem anschließenden Schritt 103 wird der Gegenstand in die Übergabeposition 18 überführt und der Gegenstand abgelegt oder an ein weiteres Handlinggerät übergeben.

In Abhängigkeit davon, ob die Normalkraft mittels Adhäsion, Magnetkraft oder Saugkraft hergestellt wird, wird in einem letzten Schritt 104 der Gegenstand 4 vom Aufnahmemittel 16 gelöst. Wenn Aufnahmemittel 16 und Koppelelement 20 unlösbar aneinander festgelegt sind, erfolgt das Lösen des Gegenstands 4 vom Anlageabschnitt 22 des Koppelelements 20 durch ein Löseelement.

Wenn Aufnahmemittel 16 und Koppelelement 20 lösbar aneinander festlegbar sind, umfasst das Lösen des Koppelelements 20 vom Aufnahmemittel 16 ein schlichtes Aufheben einer zwischen Koppelelement 20 und Aufnahmemittel 16 vorherrschendem Formschluss oder Reibschluss.

Zwischen Schritt 103 und 104 kann in einem Schritt 103' ein Erfassen einer Greifbarkeit des am Aufnahmemittel 16 angeordneten Gegenstands 4 durch das Sensormittel 10 erfolgen. Dieses kann insbesondere beim Überführen des Gegenstands 4 in die Übergabeposition 18 erfolgen. Ferner kann solchenfalls ein Greifabschnitts 34 am Gegenstand 4 durch die Steuereinheit 8 und/oder durch das der Steuereinheit 8 zugeordneten Sensormittels 10 erfasst oder definiert werden.

Ferner kann in dem Schritt 103'ein Hintergriffs oder Reibschluss zwischen Greifer 32 und Greifabschnitt 34 hergestellt werden, wenn eine Zugänglichkeit des Greifabschnitts 34 durch das Sensormittel 10 erfasst wird.

### Bezugszeichenliste

- 2: Aufnahmevorrichtung
- 4: Gegenstand
- 6: Schütte
- 8: Steuereinheit
- 10: Sensormittel
- 12: Koppelabschnitt
- 14: Handlinggerät
- 16: Aufnahmemittel
- 18: Übergabeposition
- 20: Koppelelement
- 22: Anlageabschnitt
- 24: Sauggreifer
- 26: Vertiefung
- 28: Dichtmittel
- 30: Öffnung
- 32: Greifer
- 34: Greifabschnitt

- 100-104: Verfahrensschritte

## Patentansprüche

1. Aufnahmevorrichtung (2) zum Aufnehmen eines beliebig angeordneten Gegenstands (4), mit mindestens einer Steuereinheit (8), der mindestens ein Sensormittel (10) zuordenbar oder zugeordnet ist, durch das ein Koppelabschnitt (12) mindestens eines Gegenstands (4) durch die Steuereinheit (8) erfassbar und/oder definierbar ist, mit mindestens einem durch die Steuereinheit (8) ansteuerbaren Handlinggerät (14), das durch die Steuereinheit (8) am Gegenstand (4) positionierbar ist, mit mindestens einem Aufnahmemittel (16), das über ein Anschlussstück an dem Handlinggerät (14) festlegbar ist, und durch das der Gegenstand (4) aufnehmbar, am Aufnahmemittel (16) festlegbar und in eine Übergabeposition (18) überführbar ist, wobei das Aufnahmemittel (16) mindestens ein Koppelelement (20) mit einem Aufnahmeabschnitt und mit einem Anlageabschnitt (22) umfasst, mit dem das Aufnahmemittel (16) am Koppelabschnitt (12) des Gegenstands (4) anlegbar und ein Kraftschluss durch Normalkraft zwischen Koppelelement (20) des Aufnahmemittels (16) und Gegenstand (4) herstellbar ist, **dadurch gekennzeichnet, dass** das Koppelelement (20) des Aufnahmemittels (16) einen Adhäsivgreifer umfasst, wobei der Adhäsivgreifer einen Klebegreifer und/oder einen Foliengreifer umfasst und **gekennzeichnet durch** mindestes ein Leitungsmittel, durch das ein Wirkmedium zum Anlageabschnitt (22) hin oder vom Anlageabschnitt (22) weg transportierbar ist und durch mindestens ein im oder am Aufnahmemittel (16) angeordnetes Speichermittel zum Bevorraten eines als Klebstoff oder Erstarrmittel ausgebildeten Wirkmediums, das durch das Leitungsmittel mit dem Aufnahmeabschnitt verbindbar oder verbunden ist.

2. Aufnahmevorrichtung (2) nach Anspruch 1, **dadurch gekennzeichnet, dass** das Koppelelement (20) des Aufnahmemittels (16) einen Magnetgreifer und/oder einen Sauggreifer (24) umfasst.

3. Aufnahmevorrichtung (2) nach Anspruch 1 oder 2, **gekennzeichnet durch** mindestens ein Unterdruckmittel zum Ansaugen eines als Luft ausgebildeten Wirkmediums am als Sauggreifer (24) ausgebildeten Aufnahmemittel (16), insbesondere durch das Leitungsmittel.

4. Aufnahmevorrichtung (2) nach mindestens einem der vorhergehenden Ansprüche, **dadurch gekennzeichnet, dass** der Koppelabschnitt (12) des Gegenstands (4) eine unebene, insbesondere verrundete oder kantige, Oberfläche des Gegenstands (4) umfasst und/oder dass der Koppelabschnitt (12) des Gegenstands (4) eine Vertiefung (26) des Gegenstands (4) umfasst.

5. Aufnahmevorrichtung (2) nach Anspruch 3 oder 4, **gekennzeichnet durch** mindestens ein zwischen Aufnahmeabschnitt des Koppelelements (20) des Aufnahmemittels (16) und Koppelabschnitt (12) des Gegenstands (4) angeordneten Dichtmittels (28), das den Koppelabschnitt (12) umfangsseitig zumindest nahezu vollständig umgibt.

6. Aufnahmevorrichtung (2) nach mindestens einem der vorhergehenden Ansprüche, **dadurch gekennzeichnet, dass** der Aufnahmeabschnitt des Koppelelements (20) des Aufnahmemittels (16) mindestens eine, insbesondere düsenartige, Öffnung (30) umfasst, die mittelbar oder unmittelbar mit der dem Leitungsmittel verbindbar oder verbunden ist und durch die das Wirkmedium einsaugbar oder austretbar ist.

7. Aufnahmevorrichtung (2) nach mindestens einem der vorhergehenden Ansprüche, **dadurch gekennzeichnet, dass** das Aufnahmemittel (16) mindestens ein Thermoelement umfasst, durch das eine Temperatur zumindest am Anlageabschnitt (22) des Koppelelements (20) einstellbar ist.

8. Aufnahmevorrichtung (2) nach mindestens einem der vorhergehenden Ansprüche, **dadurch gekennzeichnet, dass** das Aufnahmemittel (16) und das Koppelelement (20) unlösbar aneinander festgelegt sind und/oder **gekennzeichnet durch** mindestens ein Löseelement, durch das der Gegenstand (4) in der Übergabeposition (18) vom Anlageabschnitt (22) des Koppelelements (20) des Aufnahmemittels (16) lösbar ist.

9. Aufnahmevorrichtung (2) nach mindestens einem der vorhergehenden Ansprüche, **dadurch gekennzeichnet, dass** das Aufnahmemittel (16) und das Koppelelement (20) lösbar aneinander festgelegt sind und/oder dass das Aufnahmemittel (16) mindestens ein Greifelement umfasst, mit dem das Koppelelement (20) form- und/oder kraftschlüssig durch Reibung am Greifelement festlegbar ist.

10. Aufnahmevorrichtung (2) nach mindestens einem der vorhergehenden Ansprüche, **gekennzeichnet durch** mindestens einen Greifer (32), der am das Aufnahmemittel (16) aufweisenden Handlinggerät (14) festlegbar oder festgelegt ist, und durch den der am Aufnahmemittel (16) festgelegte Gegenstand (4) durch Bilden eines Hintergriffs oder Reibschluss festlegbar ist.

11. Verfahren zum Betreiben einer Aufnahmevorrichtung (2) nach einem der Ansprüche 1 bis 10, mit den Schritten:
a. Erfassen eines Gegenstands (4), insbesondere aus einer eine Vielzahl von Gegenständen (4) aufweisenden Schütte (6), durch das Sensormittel (10) und Erfassen und/oder Definieren eines Koppelabschnitts (12) mindestens eines Gegenstands (4) durch die Steuereinheit (8) und/oder des der Steuereinheit (8) zugeordneten Sensormittels (10);
b. Überführen des Handlinggeräts (14) an den Gegenstand (4) und Anlegen des Anlageabschnitt (22) des Koppelelements (20) des Aufnahmemittels (16) an den Koppelabschnitt (12) des Gegenstands (4);
c. Herstellen eines Kraftschluss durch Normalkraft zwischen Koppelelement (20) des Aufnahmemittels (16) und Gegenstand (4);
d. Überführen des Gegenstands (4) in die Übergabeposition (18) und Ablegen des Gegenstands (4) oder Übergeben des Gegenstands (4) an ein weiteres Handlinggerät (14); und
e. Lösen des Gegenstands (4) vom Aufnahmemittel (16) durch
i. Lösen des Gegenstands (4) vom Anlageabschnitt (22) des Koppelelements (20) durch ein Löseelement, wenn Aufnahmemittel (16) und das Koppelelement (20) unlösbar aneinander festgelegt sind; oder
ii. Lösen des Koppelelements (20) von Aufnahmemittel (16), wenn Aufnahmemittel (16) und das Koppelelement (20) lösbar aneinander festgelegt sind.

12. Verfahren nach Anspruch 11, **gekennzeichnet durch** die Schritte
a. Erfassen einer Greifbarkeit des am Aufnahmemittel (16) angeordneten Gegenstands (4) durch das Sensormittel (10), insbesondere beim Überführen des Gegenstands (4) in die Übergabeposition (18) und Erfassen und/oder Definieren eines Greifabschnitts (34) am Gegenstand (4) durch die Steuereinheit (8) und/oder durch das der Steuereinheit (8) zugeordneten Sensormittels (10); und
b. Herstellen eines Hintergriffs oder Reibschluss zwischen Greifer (32) und Greifabschnitt (34), wenn eine Zugänglichkeit des Greifabschnitts (34) durch das Sensormittel (10) erfasst wird.

## Claims

1. A pick-up apparatus (2) for picking up an arbitrarily arranged object (4), in particular from a bin (6) containing a plurality of objects (4), comprising at least one control unit (8) to which at least one sensor means (10) can be or is assigned, by means of which a coupling section (12) of at least one object (4) can be detected and/or defined by the control unit (8), comprising at least one handling device (14), such as a robot, which can be actuated by the control unit (8) and positioned at the object (4) by the control unit (8), comprising at least one pick-up means (16), which can be fixed to the handling device (14) via a connection piece and by means of which the object (4) can be picked up, fixed to the pick-up means (16) and transferred into a transfer position (18), wherein the pick-up means (16) comprises at least one coupling element (20) with a receiving section and at least one contact section (22), by which the pick-up means (16) can be applied to the coupling section (12) of the object (4) and a force-locking connection by normal force can be established between the coupling element (20) of the pick-up means (16) and the object (4), wherein the coupling element (20) of the pick-up means (16) comprises an adhesion gripper, wherein the adhesive gripper comprises an adhesive gripper and/or a film gripper and is **characterised by** at least one conduit through which an active medium can be transported to or from the contact section (22) or away from the contact section (22), and by at least one storage means arranged in or on the pick-up means (16) for storing an active medium in the form of an adhesive or setting agent, which can be connected or is connected to the receiving section by the conduit.

2. A pick-up apparatus (2) according to claim 1, **characterised in that** the coupling element (20) of the pick-up means (16) comprises a magnetic gripper and/or a suction gripper (24).

3. A pick-up apparatus (2) according to claim 1 or 2, **characterised by** at least one vacuum means for drawing in an active medium formed as air at the pick-up means (16) formed as a suction gripper (24), in particular by means of the conduit.

4. A pick-up apparatus (2) according to at least one of the preceding claims, **characterised in that** the coupling section (12) of the object (4) comprises an uneven, in particular rounded or edged, surface of the object (4) and/or that the coupling section (12) of the object (4) comprises a recess (26) of the object (4).

5. A pick-up apparatus (2) according to claim 3 or 4, **characterised by** at least one sealing means (28) arranged between the receiving section of the coupling element (20) of the pick-up means (16) and the coupling section (12) of the object (4), which surrounds the coupling section (12) at least almost completely around its circumference.

6. A pick-up apparatus (2) according to at least one of the preceding claims, **characterised in that** the receiving section of the coupling element (20) of the pick-up means (16) comprises at least one, in particular nozzle-like, opening (30), which is directly or indirectly connectable or connected to the conduit and through which the active medium can be drawn in or discharged.

7. A pick-up apparatus (2) according to at least one of the preceding claims, **characterised in that** the pick-up means (16) comprises at least one thermoelement, by means of which a temperature can be set at least at the contact section (22) of the coupling element (20).

8. A pick-up apparatus (2) according to at least one of the preceding claims, **characterised in that** the pick-up means (16) and the coupling element (20) are fixed to one another in a non-releasable manner and/or **characterised by** at least one release element, by means of which the object (4) can be released in the transfer position (18) from the contact section (22) of the coupling element (20) of the pick-up means (16).

9. A pick-up apparatus (2) according to at least one of the preceding claims, **characterised in that** the pick-up means (16) and the coupling element (20) are fixed to one another in a releasable manner and/or that the pick-up means (16) comprises at least one gripping element, by means of which the coupling element (20) can be fixed in a form-fit and/or force-fit manner by friction at the gripping element.

10. A pick-up apparatus (2) according to at least one of the preceding claims, **characterised by** at least one gripper (32), which can be fixed or is fixed to the handling device (14) carrying the pick-up means (16), and by means of which the object (4) secured to the pick-up means (16) can be secured by forming a rear grip or friction lock.

11. A method for operating a pick-up apparatus (2) according to any one of claims 1 to 10, comprising the steps:
a. Detecting an object (4), in particular from a bin (6) containing a plurality of objects (4), by the sensor means (10), and detecting and/or defining a coupling section (12) of at least one object (4) by the control unit (8) and/or by the sensor means (10) assigned to the control unit (8);
b. Transferring the handling device (14) to the object (4) and applying the contact section (22) of the coupling element (20) of the pick-up means (16) to the coupling section (12) of the object (4);
c. Establishing a force-locking connection by normal force between the coupling element (20) of the pick-up means (16) and the object (4);
d. Transferring the object (4) into the transfer position (18) and placing the object (4) down or handing the object (4) over to a further handling device (14); and
e. Releasing the object (4) from the pick-up means (16) by
i. Releasing the object (4) from the contact section (22) of the coupling element (20) by a release element, when the pick-up means (16) and the coupling element (20) are fixed to one another in a non-releasable manner; or
ii. Releasing the coupling element (20) from the pick-up means (16), when the pick-up means (16) and the coupling element (20) are fixed to one another in a releasable manner.

12. Method according to claim 11, **characterised by** the steps
a. Detecting the graspability of the object (4) arranged on the pick-up means (16) by the sensor means (10), in particular during the transfer of the object (4) into the transfer position (18), and detecting and/or defining a grasping section (34) on the object (4) by the control unit (8) and/or by the sensor means (10) assigned to the control unit (8); and
b. Forming a rear grip or friction lock between the gripper (32) and the grasping section (34), when the accessibility of the grasping section (34) is detected by the sensor means (10).

## Revendications

1. Dispositif de préhension (2) pour saisir un objet (4) disposé de manière quelconque, en particulier à partir d'une goulotte (6) contenant une multitude d'objets (4), avec au moins une unité de commande (8) à laquelle peut être associé ou est associé au moins un moyen de détection (10) grâce auquel une section de couplage (12) d'au moins un objet (4) peut être détectée et/ou définie par l'unité de commande (8), avec au moins un appareil de manipulation (14) pouvant être commandé par l'unité de commande (8), tel qu'un robot, qui peut être positionné sur l'objet (4) par l'unité de commande (8), avec au moins un moyen de préhension (16) qui peut être fixé à l'appareil de manipulation (14) via un raccord et grâce auquel l'objet (4) peut être saisi, fixé au moyen de préhension (16) et transféré vers une position de transfert (18), le moyen de préhension (16) comprenant au moins un élément de couplage (20) avec une partie de préhension et au moins une section d'installation (22) avec laquelle le moyen de préhension (16) peut être appliqué contre la section de couplage (12) de l'objet (4) et une liaison par adhérence peut être établie par une force normale entre l'élément de couplage (20) du moyen de préhension (16) et l'objet (4), **caractérisé en ce que** l'élément de couplage (20) du moyen de préhension (16) comprend un préhenseur adhésif, ce préhenseur adhésif comprenant un préhenseur collant et/ou un préhenseur à film, et **caractérisé par** au moins un moyen de guidage, permettant de transporter un agent actif vers la section d'installation (22) ou depuis la section d'installation (22), et par au moins un moyen de stockage disposé dans ou sur le moyen de préhension (16) pour stocker un agent actif sous forme d'adhésif ou d'agent de solidification, qui peut être relié ou est relié à la section de préhension par le moyen de guidage.

2. Dispositif de préhension (2) selon la revendication 1, **caractérisé en ce que** l'élément de couplage (20) du moyen de préhension (16) comprend un préhenseur magnétique et/ou une ventouse de préhension (24).

3. Dispositif de préhension (2) selon la revendication 1 ou 2, **caractérisé par** au moins un moyen de dépression pour aspirer un agent actif sous forme d'air au niveau du moyen de préhension (16) conçu comme une ventouse de préhension (24), en particulier par le moyen de guidage.

4. Dispositif de préhension (2) selon au moins l'une des revendications précédentes, **caractérisé en ce que** la section de couplage (12) de l'objet (4) comprend une surface inégale, en particulier arrondie ou anguleuse, de l'objet (4) et/ou **en ce que** la section de couplage (12) de l'objet (4) comprend un renfoncement (26) de l'objet (4).

5. Dispositif de préhension (2) selon la revendication 3 ou 4, **caractérisé par** au moins un agent d'étanchéité (28) disposé entre la section de préhension de l'élément de couplage (20) du moyen de préhension (16) et la section de couplage (12) de l'objet (4), qui entoure au moins presque complètement la section de couplage (12) sur son pourtour.

6. Dispositif de préhension (2) selon au moins l'une des revendications précédentes, **caractérisé en ce que** la section de préhension de l'élément de couplage (20) du moyen de préhension (16) comprend au moins une ouverture (30), en particulier de type buse, qui est reliée ou peut être reliée directement ou indirectement au moyen de guidage et à travers laquelle l'agent actif peut être aspiré ou s'échapper.

7. Dispositif de préhension (2) selon au moins l'une des revendications précédentes, **caractérisé en ce que** le moyen de préhension (16) comprend au moins un thermocouple grâce auquel une température peut être réglée au moins au niveau de la section d'installation (22) de l'élément de couplage (20).

8. Dispositif de préhension (2) selon au moins l'une des revendications précédentes, **caractérisé en ce que** le moyen de préhension (16) et l'élément de couplage (20) sont fixés de manière inamovible l'un à l'autre et/ou **caractérisé par** au moins un élément de déverrouillage grâce auquel l'objet (4) peut être détaché de la section d'installation (22) de l'élément de couplage (20) du moyen de préhension (16) vers la position de transfert (18).

9. Dispositif de préhension (2) selon au moins l'une des revendications précédentes, **caractérisé en ce que** le moyen de préhension (16) et l'élément de couplage (20) sont fixés l'un à l'autre de manière amovible et/ou **en ce que** le moyen de préhension (16) comprend au moins un élément de préhension avec lequel l'élément de couplage (20) peut être fixé par adhérence et/ou par friction sur l'élément de préhension.

10. Dispositif de préhension (2) selon au moins l'une des revendications précédentes, **caractérisé par** au moins un préhenseur (32) qui peut être fixé ou est fixé sur l'appareil de manipulation (14) comportant le moyen de préhension (16) et grâce auquel l'objet (4) fixé sur le moyen de préhension (16) peut être fixé par formation d'une prise arrière ou d'une liaison par friction.

11. Procédé pour faire fonctionner un dispositif de préhension (2) selon l'une des revendications 1 à 10, comprenant les étapes suivantes :
a. Détection d'un objet (4), en particulier à partir d'une goulotte (6) contenant une multitude d'objets (4), par le moyen de détection (10) et détection et/ou définition d'une section de couplage (12) d'au moins un objet (4) par l'unité de commande (8) et/ou le moyen de détection (10) associé à l'unité de commande (8) ;
b. Transfert de l'appareil de manipulation (14) vers l'objet (4) et application de la section d'installation (22) de l'élément de couplage (20) du moyen de préhension (16) sur la section de couplage (12) de l'objet (4) ;
c. Établissement d'une liaison par adhérence grâce à une force normale entre l'élément de couplage (20) du moyen de préhension (16) et l'objet (4) ;
d. Transfert de l'objet (4) vers la position de transfert (18) et dépose de l'objet (4) ou transfert de l'objet (4) vers un autre appareil de manipulation (14) ; et
e. Détachement de l'objet (4) du moyen de préhension (16) par
i. Détachement de l'objet (4) de la section d'installation (22) de l'élément de couplage (20) à l'aide d'un élément de détachement, lorsque le moyen de préhension (16) et l'élément de couplage (20) sont fixés l'un à l'autre de manière inamovible ; ou
ii. Détachement de l'élément de couplage (20) du moyen de préhension (16) lorsque le moyen de préhension (16) et l'élément de couplage (20) sont fixés de manière amovible l'un à l'autre.

12. Procédé selon la revendication 11, **caractérisé par** les étapes suivantes
a. Détection d'une préhensibilité de l'objet (4) disposé sur le moyen de préhension (16) par le moyen de détection (10), en particulier lors du transfert de l'objet (4) vers la position de transfert (18), et détection et/ou définition d'une section de préhension (34) sur l'objet (4) par l'unité de commande (8) et/ou par le moyen de détection (10) associé à l'unité de commande (8) ; et
b. Établissement d'une prise arrière ou d'une adhérence par friction entre le préhenseur (32) et la section de préhension (34) lorsque l'accessibilité de la section de préhension (34) est détectée par le moyen de détection (10).
